# EUROPÄISCHE PATENTSCHRIFT

(11) **EP 1 703 286 B1**
(45) Veröffentlichungstag und Bekanntmachung des Hinweises auf die Patenterteilung: **14.05.2008**
(21) Anmeldenummer: 06005345.1
(22) Anmeldetag: 16.03.2006
(51) Int. Cl.: G01P 1/02, G01H 11/00, G01M 13/04, G01D 11/24

(54) **Schwingungssensor oder Meßaufnehmer**
Vibration sensor or transducer
Capteur de vibrations ou transducteur

(30) Priorität: 16.03.2005 DE 102005012466
(43) Veröffentlichungstag der Anmeldung: 20.09.2006
(73) Patentinhaber: Prüftechnik Dieter Busch AG, 85737 Ismaning (DE)
(72) Erfinder: Lysen,Heinrich, 85748 Garching (DE)

(56) Entgegenhaltungen:
- EP-A- 0 776 065
- DE-B3- 10 304 905
- DE-U1- 20 301 106

## Beschreibung

Die vorliegende Erfindung betrifft einen Schwingungssensor oder Meßaufnehmer in ergonomisch vorteilhafter Ausgestaltung.

Beim Anbringen und Befestigen von Schwingungssensoren oder Accelerometern an Maschinen ist es stets von Bedeutung, einerseits die zugehörigen Anschlußdrähte bzw. -kabel fachgerecht zu verlegen und zu fixieren, damit die zu messenden Signale nicht durch Eigenbewegung des Kabels verfälscht werden. Andererseits sollte der Zeitbedarf für eine solche fachgerechte Verlegung und Plazierung von Kabeln möglichst gering sein. Herkömmliche Schwingungssensoren und Accelerometer sind hier in gewisser Weise problembehaftet, insbesondere können bei eiligen Verlegungsarbeiten sogar die Kabel der Schwingungssensoren versehentlich beschädigt werden, speziell solche, die fest an einem Sensor befestigt (angeschlagen) sind.

Aus der DE 20301106 ist eine Vorrichtung bekannt, mit welcher es in relativ einfacher Weise möglich ist, installationsbedingte Beschädigungen von Anschlußkabeln der obengenannten Sensoren zu vermeiden. Dies gilt insbesondere für Sensoren mit seitlich austretendem Kabel. Allerdings ist ein spezielles Zusatzteil erforderlich, und auch die Sensoren sollten für die dort gezeigte Ausführungsform ein modifiziertes Anschlußgewinde aufweisen.

In der DE 103 04 905 B3 ist eine Abdeckung für ein elektronisches Gerät beschrieben, wobei in der Abdeckung eine Zugentlastung und eine Kabelführung für ein mit einer Steckverbindung an das elektronische Gerät angeschlossenes Kabel vorgesehen ist. Hier wird nicht angegeben, in welcher Anordnung das elektronische Gerät selbst zu montieren ist, Es ist keine Beziehung zwischen der Seite des Geräts, auf der ggf. Vorrichtungen zur Montage des Geräts angeordnet sind, und der Seite des Geräts, auf der die Abdeckhaube mit der Zuleitung angebracht wird, erkennbar.

In der EP 0 776 065 A1 ist eine Winkelmesseinrichtung angegeben, wobei die Winkelmesseinrichtung auf einer Seite mit einer Welle verschraubt wird. Auf der von dieser Welle abgewandten Seite der Winkelmesseinrichtung wird ein Kabel angeschlossen.

Die vorliegende Erfindung löst das geschilderte Problem in geschickter und zugleich kostengünstiger Weise mit den Mitteln, wie sie in den unabhängigen Patentansprüchen genannt werden.

Die Erfindung zeichnet sich also insbesondere durch einen Schwingungssensor oder einen Meßaufnehmer mit einem Anschlußkabel für elektrische Versorgungs- und/oder Signalspannungen aus. Speziell ist ein Klemm- oder Wickelraum an der Unterseite des Sensor-Gehäuses vorhanden, wohinein das Anschlußkabel mit einer oder mehreren Windungen deponierbar ist, und wobei die eine oder mehrere Windungen in einer einzigen Ebene liegen. Dabei soll das Anschlußkabel in tangentialer Richtung (bezogen auf die ein oder mehrere Windungen) aus dem Klemm- oder Wickelraum (42) in die äußere Umgebung austreten.

Nach herkömmlicher Technologie werden Anschlußkabel von Schwingungssensoren oder Accelerometer entweder koaxial zur Längsachse eines solchen Sensors angebracht und können fest angeschlagen sein oder mittels Koaxial-Steckverbindung angeschlossen werden, oder aber von der Seite zugeführt werden, also in radialer Richtung austreten. Im letzteren Falle wird fester Kabelanschlag bevorzugt. - Die Erfindung wendet sich von dieser seit Jahrzehnten verwendeten Technik radikal ab und basiert darauf, nunmehr ein am Sensor seitlich tangential gerichtetes Austreten von Anschlußkabeln vorzusehen. Außerdem soll dies in Verbindung mit einer am Sensor befindlichen Vorrichtung geschehen, die es gestattet, beim bestimmungsgemäßen Einschrauben solcher Sensoren das jeweils zugehörige Anschlußkabel in einer Wickelkammer anteilig zu deponieren. Mit dieser Maßnahme wird also einerseits einer Beschädigung des Anschlußkabels beim Anbringen eines Sensors wirksam vorgebeugt, andererseits wird gleichzeitig ein Zugentlastungsmechanismus bereitgestellt, der darüberhinaus auch noch als Knickschutz funktioniert. - Eine Befestigung von erfindungsgemäß ausgestatteten Sensoren mit nachfolgend fachgerechter Verlegung und ggf. Fixierung der zugehörigen Anschlußkabel gestaltet sich also besonders einfach und zeitsparend. Darüberhinaus stellt die erfindungsgemäß vorgesehene Kabelzufuhr auch nach Beendigung der Installationsarbeiten für einen solchen Sensor einen verbesserten Schutz gegen versehentliches Abreißen oder Beschädigen solcher Anschlußkabel dar.

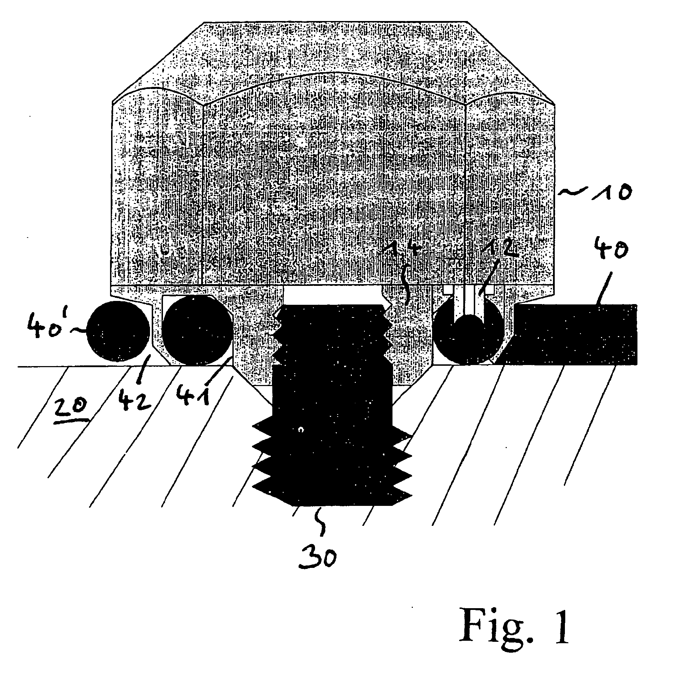

Die Erfindung wird im folgenden anhand der Zeichnung erläutert.

Innerhalb eines Sensorgehäuses 10 befindet sich ein Schwingungssensor oder Accelerometer, welcher hier aus Gründen der Übersichtlichkeit nicht näher gezeigt ist. An der Unterseite des Sensorgehäuses befindet sich ein mit z.B. einem Innengewinde versehener Befestigungsstutzen 14, welcher in an sich bekannter Weise an einen schraubbaren Verbindungsbolzen 30 und somit an die Oberfläche eines Maschinenteils 20 angeschraubt werden kann. Anstelle des Befestigungsstutzens kann das Sensorgehäuse auch mit einem Meßbolzen mit Außengewinde versehen sein; für die vorliegende Erfindung kommen beide Alternativen in Betracht. Mit einer Kontaktierung 12 wird die vom Sensor abgegebene Signalspannung an den Innenleiter eines Koaxialkabels gelegt, während der entsprechende Außenleiter durch das Gehäuse des Sensors oder, bevorzugt, durch ein zusätzliches Anschlußelement kontaktiert wird. Das Koaxialkabel ist sodann etwa eine halbe Windung in einer Kabelkammer 41 deponiert und wird dort somit so geführt, daß es die Kabelkammer in etwa tangentialer Richtung durch eine vorgesehene Öffnung oder Aussparung nach außen verlassen kann. Das Koaxialkabel kann somit beim Festschrauben des Sensors im Klemm- oder Wickelraum 42 mit einer oder mehreren Windungen aufgewickelt werden. Dieser Aspekt stellt einen wesentlichen Teil der Erfindung dar. Der Klemmraum 42 befindet sich relativ zur Kabelkammer 41 radial gesehen außenliegend. Der Klemmraum 42 ist so bemessen, daß zumindest eine Windung, bevorzugt zwei oder mehr Windungen des Kabels 40 (im Querschnitt durch Bezugszeichen 40 ' gekennzeichnet) aufgenommen werden können. Die Höhe des Klemmraums ist bevorzugt so bemessen, daß das Kabel 40 durch leichten Druck auf seine Ober- bzw. Unterseite (also z.B. in dessen radialer Richtung) in Position gehalten wird, andererseits aber ohne Beschädigung auch manuell um den Sensor auf- oder abgewickelt werden kann. Das Anschlußkabel ist also, wenn der Schwingungssensor oder Meßaufnehmer fest eingeschraubt ist, auch z.B. auch mittels einer vordefinierten Belastung in Richtung seines Durchmessers und entsprechender leichter Verformung vor unbeabsichtigtem Abspulen aus seiner Sollposition geschützt; insbesondere kann es daher bei Vibrationen der zu vermessenden Maschine nicht zu Fehlsignalspannungen Anlaß geben. - Wie ersichtlich, kann das Kabel aus jeder beliebigen Winkelposition vom Sensor in tangentialer Richtung herausgeführt werden. Außerdem kann es sofort und direkt über die Oberfläche des Maschinenteils 20 gelegt werden, so daß es vor Beschädigung durch bewegte Teile oder Werkzeuge bestmöglich geschützt ist, insbesondere dann, wenn es zusätzlich mittels Klebeband o. dgl. an der zu überprüfenden Maschine fixiert und zusätzlich geschützt wird.

## Patentansprüche

1. Schwingungssensor oder Meßaufnehmer mit mindestens einem Gewinde zum Einschrauben in ein Maschinenteil (20) und mit einem Anschlußkabel (40) für elektrische Versorgungs- und/oder Signalspannungen,
**gekennzeichnet durch** einen Klemm- oder Wickelraum (42) an der dem Maschinenteil (20) zugewandten Seite des Sensor-Gehäuses (10), in welchem das Anschlußkabel mit einer oder mehreren Windungen deponierbar ist und
eine zusätzliche Kabelkammer (41), welche im Vergleich zum Klemm- oder Wickelraum (42) radial innenliegend angeordnet ist, und
wobei Kabelkammer (41) und Klemm- oder Wickelraum (42) die eine oder mehreren Windungen in Kabelkammer (41) und Klemm- oder Wickelraum (42) in einer einzigen Ebene beinhalten, wobei
das Anschlußkabel in tangentialer Richtung bezogen auf die ein oder mehrere Windungen durch eine Öffnung in der Kabelkammer (41) in den Klemm- oder Wickelraum (42) austritt, und wobei
das Anschlußkabel in tangentialer Richtung bezogen auf die ein oder mehrere Windungen durch eine Öffnung im Klemm- oder Wickelraum (42) aus diesem in die äußere Umgebung austritt.

2. Schwingungssensor oder Meßaufnehmer nach Anspruch 1, bei welchem die Höhe des Klemm- oder Wickelraums (42) so dimensioniert ist, daß beim Einschrauben des Schwingungssensors oder Meßaufnehmers ein gleichzeitiges Aufwickeln des Anschlußkabels (40) in einer einzigen Ebene mit einer oder mehreren Windungen stattfindet.

3. Schwingungssensor oder Meßaufnehmer nach Anspruch 2, bei welchem die Höhe des Klemm- oder Wickelraums (42) so dimensioniert ist, daß das Anschlußkabel (40) mittels einer vordefinierten radial auf dieses gerichteten Belastung und zugehöriger Verformung vor unbeabsichtigtem Abspulen aus seiner Sollposition geschützt ist.

## Claims

1. Oscillation sensor or measurement pick-up having at least one thread for screwing into a machine part (20) and having a connecting cable (40) for electrical supply and/or signal voltages,
**characterized by** a terminal or winding area (42) on the side of the sensor housing (10) facing the machine part (20), in which the connecting cable can be deposited with one or more turns, and
an additional cable chamber (41), which is arranged radially within the terminal or winding area (42), and
with the cable chamber (41) and the terminal or winding area (42) containing the one or more turns in the cable chamber (41) and terminal or winding area (42) on a single plane, with
the connecting cable emerging in the tangential direction with respect to the one or more turns through an opening in the cable chamber (41) into the terminal or winding area (42),
and with
the connecting cable emerging in the tangential direction with respect to the one or more turns through an opening in the terminal or winding area (42), from this area into the external environment.

2. Oscillation sensor or measurement pick-up according to Claim 1, in which the height of the terminal or winding area (42) is of such a size that, when the oscillation sensor or measurement pick-up is being screwed in, the connecting cable (40) is at the same time wound up on a single plane with one or more turns.

3. Oscillation sensor or measurement pick-up according to Claim 2, in which the height of the terminal or winding area (42) is of such a size that the connecting cable (40) is protected by means of a predefined load, which is directed radially to it, and associated deformation against inadvertently becoming unwound from its nominal position.

## Revendications

1. Détecteur d'oscillations ou capteur de mesure comprenant au moins un filet pour être vissé dans une partie de machine (20) et comprenant un câble de raccordement (40) pour des tensions d'alimentation électrique et/ou de signalisation, **caractérisé par** un espace de serrage ou d'enroulement (42) sur le côté du boîtier de détecteur (10) faisant face à la partie de machine (20), dans lequel peut être déposé le câble de raccordement avec une ou plusieurs spires et une chambre à câble (41) supplémentaire qui est disposée à l'intérieur dans le sens radial par rapport à l'espace de serrage ou d'enroulement (42) et la chambre à câble (41) ainsi que l'espace de serrage ou d'enroulement (42) contenant la ou les spires dans un seul plan dans la chambre à câble (41) et dans l'espace de serrage ou d'enroulement (42), le câble de raccordement sortant dans le sens tangentiel par rapport à la ou les spires à travers une ouverture dans la chambre à câble (41) dans l'espace de serrage ou d'enroulement (42) et le câble de raccordement sortant dans le sens tangentiel par rapport à la ou les spires à travers une ouverture dans l'espace de serrage ou d'enroulement (42) hors de celui-ci dans l'environnement.

2. Détecteur d'oscillations ou capteur de mesure selon la revendication 1, avec lequel la hauteur de l'espace de serrage ou d'enroulement (42) est dimensionnée de telle sorte que lors du vissage du détecteur d'oscillations ou du capteur de mesure, il se produit simultanément un enroulement du câble de raccordement (40) dans un plan unique avec une ou plusieurs spires.

3. Détecteur d'oscillations ou capteur de mesure selon la revendication 2, avec lequel la hauteur de l'espace de serrage ou d'enroulement (42) est dimensionnée de telle sorte que le câble de raccordement (40) est protégé au moyen d'une charge prédéfinie dirigée dans le sens radial sur celui-ci et d'une déformation correspondante contre un débobinage involontaire depuis sa position voulue.
